# EUROPEAN PATENT APPLICATION

(11) **EP 4 721 554 A1**
(43) Date of publication of application: **08.04.2026**
(21) Application number: 23940783.6
(22) Date of filing: 28.08.2023
(51) Int. Cl.: A01G 7/00

(54) **ORDER/DELIVERY SYSTEM AND ORDER/DELIVERY METHOD FOR FRUITS AND VEGETABLES, AND FRUIT AND VEGETABLE CULTIVATION FACILITY**

(30) Priority: 05.06.2023 JP 2023092458
(71) Applicant: Green Green Co., Ltd., Fukuoka-shi, Fukuoka, 810-0042 (JP)
(72) Inventor: UESUGI, Hitoshi, Fukuoka-shi, Fukuoka 810-0073 (JP)
(74) Representative: Hoffmann Eitle
(86) International application number: PCT/JP2023/030988
(87) International publication number: WO 2024/252687

(57) **Abstract**

[Problem] To provide an order delivery method for fresh produce and system that can harvest and deliver fresh produce with high added value to a consumer.

[Solution] An order delivery method for fresh produce for directly delivering fresh produce grown in a fresh produce cultivation facility without passing through intermediary organizations or the like after harvesting the fresh produce according to an order from a consumer includes: an order waiting step of starting a waiting state for an order from a consumer for the fresh produce when the fresh produce reaches a mature state suitable for harvest; a delivery destination confirmation step of referring to delivery destination information included in an order when the order is received from a consumer in the waiting state to confirm that the delivery destination is within a predetermined distance from the fresh produce cultivation facility; a harvesting step of harvesting fresh produce corresponding to the order on condition that it is confirmed in the delivery destination confirming step that the delivery destination is within a predetermined distance; a packaging step of packaging the fresh produce harvested in the harvesting step; and a delivery step of directly delivering the fresh produce package created in the packaging step to the consumer.

## Description

### Technical Field

The present invention relates to an order delivery system and an order delivery method for fresh produce, and a fresh produce cultivation facility, and specifically relates to an order delivery method for fresh produce capable of delivering fresh produce to a consumer in an extremely short time from an order.

### Background Art

In recent years, fresh produce (including but not limited to vegetables and fruits; the same applies hereinafter) is required to have high added value from the viewpoint of freshness, flavor, safety, and the like.

With respect to freshness, in a conventional method of purchasing fresh produce from a retailer through wholesalers or the like, it is necessary to go through complicated processes such as cultivation, harvest, packaging, delivery, storage, processing, storage, display, retail, and delivery, and it generally takes ten days or more from harvest to arrival at a dining table. In addition, not only the cost as intermediary margins increases by passing through the intermediary organizations, but also the freshness of fresh produce is significantly lost due to impact caused during packaging, transportation, processing, display, and the like, contamination due to various bacteria, and a rapid temperature change due to refrigerated storage, and there are many cases where the quality is already degraded by the time when the fresh produce are displayed in a retail store, which is not different from "clearance items" and "imperfect products."

Furthermore, in order to avoid such deterioration in quality, pesticides are used. However, in Japan, pesticides that have been banned from use worldwide are still consumed in large quantities as a matter of course, and since the produce is immersed in a large amount of sodium hypochlorite for disinfection at the time of processing, it goes without saying that these cause serious damage to the health of the people who are the final consumers.

In this regard, as a method of obtaining fresh produce, for example, a service in which fresh produce picked in the morning at a contract farm in a suburb is shipped on the same day and can be received on the next day is also known. However, it still takes a certain time from the time the order is placed to the consumer's kitchen, and it cannot be said that the consumer is always highly satisfied.

With regard to flavor, fresh produce grown in a so-called plant factory has attracted attention, particularly due to improvements in quality and performance of fertilizer in recent years. However, in many cases, fresh produce is unprofitable compared to open-field vegetables and greenhouse vegetables in terms of plant construction cost and running cost, and a higher added value is required.

From the viewpoint of safety, a method has been proposed in which each business operator creates and saves a record when handling food such as fresh produce, by using a traceability system, so that it is possible to grasp where the food comes from and where the food goes. However, since it takes time and effort to arrange and save the record, and it is difficult to understand the necessity of the implementation in the first place, introduction has not progressed particularly in small and medium-sized enterprises.

### Citation List

### Patent Literature

Patent Literature 1: JP 2022-39767 A

### Summary of Invention

### Technical Problem

The present invention has been made in view of the above problems, and it is an object of the present invention to provide an order delivery system and an order delivery method for fresh produce, and a fresh produce cultivation facility having high added value, which have not been provided heretofore.

### Solution to Problem

In order to solve the above problems, the inventor has reviewed the conventional distribution system of fresh produce from the fundamentals, and has made an invention having the following configuration.

An order delivery method for fresh produce of the present invention is a method for directly delivering fresh produce grown in a fresh produce cultivation facility without passing through intermediary organizations or the like after harvesting the fresh produce according to an order from a consumer, the method including: an order waiting step of being in a waiting state for an order from a consumer for the fresh produce when the fresh produce reaches a mature state suitable for harvest; a delivery destination confirmation step of referring to delivery destination information included in an order when the order is received from a consumer in the waiting state to confirm that the delivery destination is within a predetermined distance from the fresh produce cultivation facility; a plant number confirmation step of confirming that a number of plants of mature fresh produce necessary for accommodating the order exists; a harvesting step of harvesting fresh produce corresponding to the order on condition that it is confirmed in the delivery destination confirming step that the delivery destination is within a predetermined distance and that a number of plants of mature fresh produce required in the plant number confirmation step exists; a packaging step of packaging the fresh produce harvested in the harvesting step; and a delivery step of directly delivering the fresh produce package created in the packaging step to the consumer.

As a result, it is possible to deliver fresh produce that has matured to a harvestable state to a consumer in a very short time from an order, and it is possible to deliver fresh produce having an extremely high added value in terms of freshness as compared with the conventional fresh produce to a dining table.

In addition, the fresh produce cultivation facility in the order delivery method for fresh produce of the present invention can be configured to include a hydroponic cultivation device.

As a result, it is necessary to harvest and deliver conventional fresh produce after performing open-field cultivation and greenhouse cultivation in a suburban field or the like. However, when hydroponic cultivation is performed, it is sufficient to have a space for assembling a kit for hydroponic cultivation. Therefore, it is possible to establish a fresh produce cultivation facility itself in an urban center, it is possible to more quickly deliver the fresh produce to a consumer in the urban center, it is possible to avoid deterioration of quality due to impact on the fresh produce due to shortening of transportation time, and it is possible to contribute to further increase added value.

Furthermore, the fresh produce cultivation facility may be configured to be managed in a substantially sterile state by a structure having high airtightness and/or installation of a ventilation system, and at the same time, to manage the number of people entering the facility to a maximum of one person.

According to such a configuration, it is possible to prevent contamination due to various bacteria and the like caused by contact with humans while maintaining the inside of the fresh produce cultivation facility in a substantially sterile state, and thus it is possible to increase added value also in terms of flavor and shelf life.

Further, another aspect of the order delivery method for fresh produce of the present invention is a method for directly delivering fresh produce grown in a fresh produce cultivation facility according to an order from a consumer without passing through intermediary organizations or the like, the method including: a distribution step of distributing, via the Internet, an image of the fresh produce in a growth process captured by an imaging device provided in the fresh produce cultivation facility; a delivery destination confirmation step of confirming, when an application for a purchase reservation for the fresh produce is made from the consumer who has browsed the image, that a delivery destination is within a predetermined distance from the fresh produce cultivation facility with reference to delivery destination information included in the purchase reservation; a reservation acceptance step of accepting the reservation on condition that the delivery destination is confirmed to be within the predetermined distance in the delivery destination confirmation step; a harvest and delivery timing designation step of designating a harvest and delivery timing at a desired timing for fresh produce for which purchase is reserved by the consumer, a harvest step of harvesting the fresh produce according to the designation of the harvest and delivery timing, a packaging step of packaging the fresh produce harvested in the harvest step; and a delivery step of directly delivering the fresh produce package created in the packaging step to the consumer.

According to such a configuration, the consumer can check the state of the fresh produce in the growth process at any time through a video distribution site or the like, and for example, can reserve the purchase of the fresh produce which is considered to grow better than other seedlings at an early stage, and further order the harvest and delivery to be performed at a desired timing.

A fresh produce cultivation device of the present invention is a fresh produce cultivation facility including at least a hydroponic cultivation device, a ventilation system, a harvest area, a packaging area, and a carrying-out area of fresh produce package, and having a structure having high airtightness, in which the number of people who enter the facility at the same time is managed to a maximum of one person by appropriate means.

The fresh produce cultivation device of the present invention may include a display window through which the inside of a facility can be seen from the outside, and the hydroponic cultivation device may include a unit installation portion in which a plurality of cultivation units are detachably installed. Further, the cultivation units may include a nutrient solution tank and a planting panel placed on the nutrient solution tank, the planting panel may include a predetermined number of planting holes, and an upper end portion of the planting hole may be formed in an R-shape.

With the above configuration, unlike the conventional distribution, all the processes up to the cultivation, harvest, transportation, and sales of the fresh produce can be completed in one place (in the fresh produce cultivation facility), and deterioration of quality of the fresh produce can be reduced from the viewpoint of hygiene or the like. In addition, since the upper end portion of the planting hole arranged in the planting panel is formed in an R-shape, it is possible to contribute to the suppression of the generation of algae and the prevention of damage when inserting and removing the fresh produce plants.

### Advantageous Effects of Invention

As described above, according to the present invention, it is possible to provide an order delivery system, an order delivery method, and a fresh produce cultivation facility that harvests and delivers fresh produce having a high added value to a consumer.

### Brief Description of Drawings

Fig. 1 is an explanatory diagram illustrating an embodiment of an order delivery system according to the present invention.

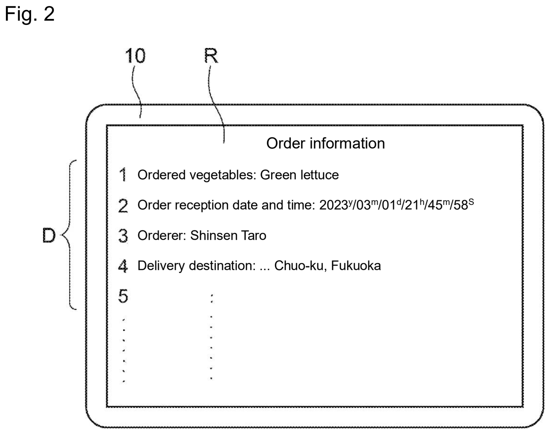

Fig. 2 is an explanatory diagram illustrating a terminal in a state where an order reception slip used in the order delivery system according to the present invention is output.
Fig. 3 is an explanatory diagram illustrating a hydroponic cultivation device used in the order delivery system according to the present invention.

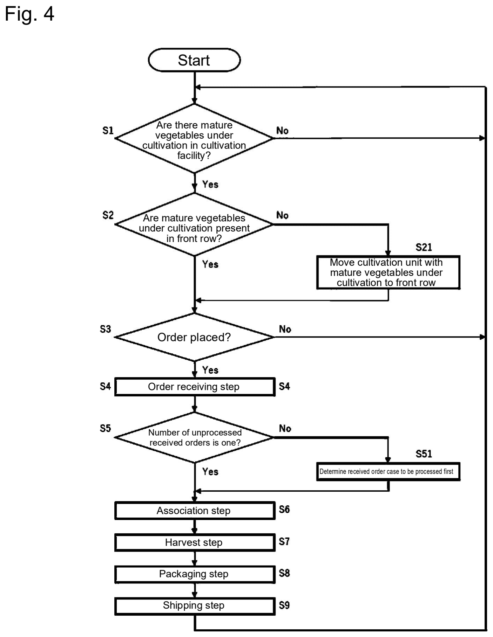

Fig. 4 is a flowchart illustrating an operation flow of the order delivery system according to the present invention.

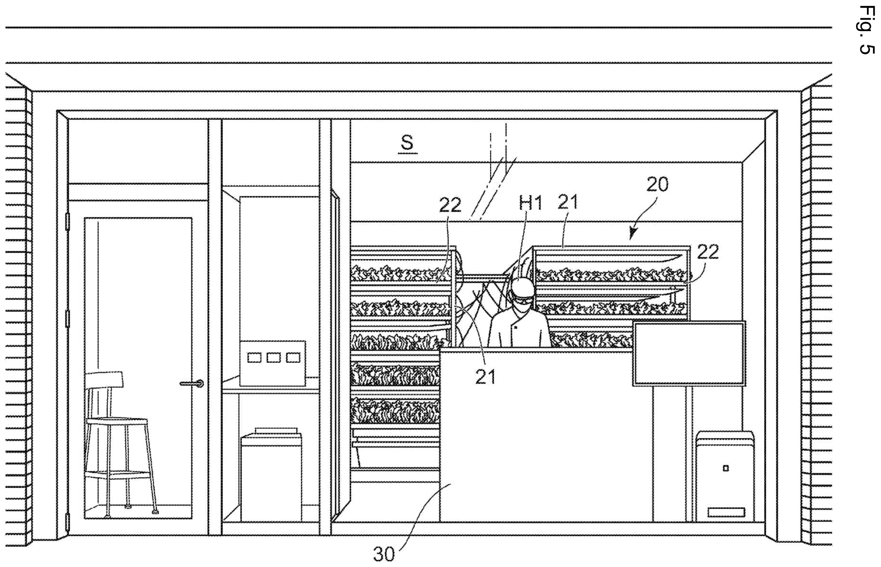

Fig. 5 is a front view showing an embodiment of a fresh produce cultivation facility according to the present invention.

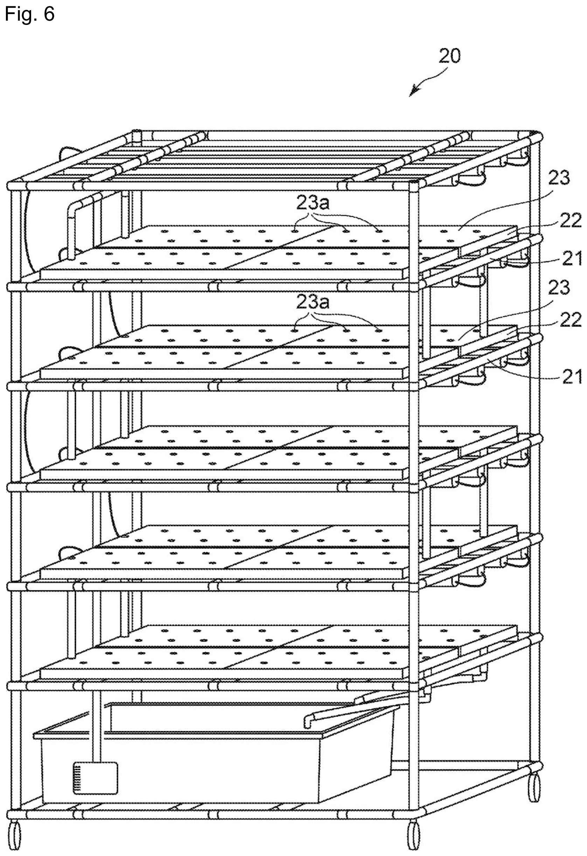

Fig. 6 is a perspective view illustrating an embodiment of a hydroponic cultivation device provided in a fresh produce cultivation facility according to the present invention.

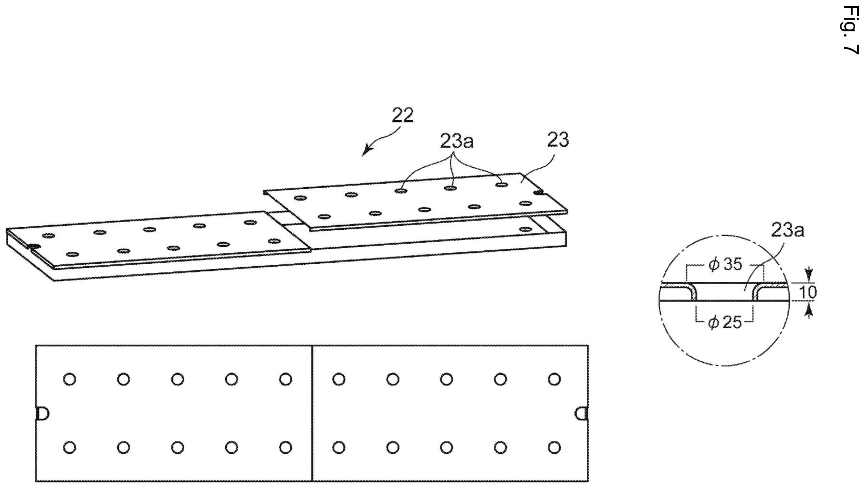

Fig. 7 is a view showing an embodiment of a cultivation unit of a hydroponic cultivation device provided in a fresh produce cultivation facility according to the present invention.

### Reference Signs List

- 10: Tablet terminal
- 20: Hydroponic cultivation device
- 21: Rack
- 21a to 21c: Rack shelf
- 22: Cultivation unit
- 23: Planting panel
- 23a: Planting hole
- 30: Work table
- 40: Carrying-out area (shipping port)
- B: Fresh produce package
- D: Order information
- E: Outside-facility area
- H1: Worker
- H2: Courier
- H3: Orderer
- P1 to P10: Position of cultivation unit on each shelf of rack
- R: Order reception slip
- S: Indoor space
- V: Vegetables
- W: Work area

### Description of Embodiments

An example of an embodiment of an order delivery method for fresh produce, an order delivery system, and a fresh produce cultivation facility according to the present invention will be described with reference to the drawings. Here, leaf vegetables are to be grown.

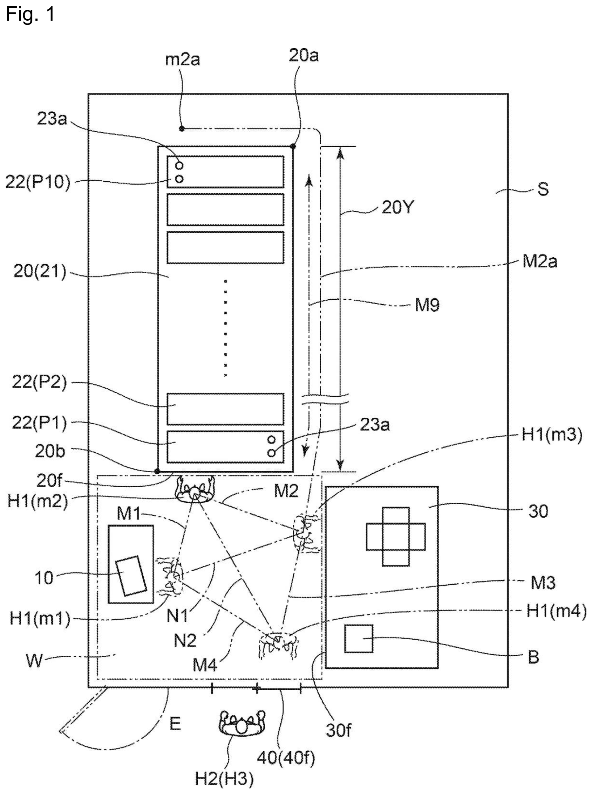

As illustrated in Fig. 1, the order delivery system according to the present embodiment includes a tablet terminal 10 used for processing such as order reception for the vegetables V, a hydroponic cultivation device 20 for the vegetables V, a work table 30 for packaging the harvested vegetables V, and a shipping port 40 through which the package B of vegetables V is carried out of the facility.

The tablet terminal 10, the hydroponic cultivation device 20, and the work table 30 are disposed in the same indoor space S of the fresh produce cultivation facility.

The shipping port 40 is disposed at a boundary position between the indoor space S and the outside-facility area E.

A work area W is secured in the indoor space S, and includes elements such as the tablet terminal 10, the hydroponic cultivation device 20, the work table 30, and the shipping port 40, or is at least adjacent to these elements.

The tablet terminal 10, together with a server computer (not illustrated), forms a part of an order reception processing system implemented in the system of the present invention. Note that the tablet terminal 10 as hardware may have all the functions regardless of whether the tablet terminal 10 and the server computer are integrated or separate.

The order reception processing system includes a server computer connected to the Internet, and can receive an order based on information input from an orderer terminal (not illustrated) such as a smartphone. The order processing is executed by creating the order reception slip R including the order information D from the input information or outputting the order reception slip R to the tablet terminal 10.

The tablet terminal 10 used in the present embodiment includes a display capable of displaying information such as the order reception slip R. As the tablet terminal 10, a portable terminal having excellent portability is suitable, but of course, the tablet terminal is not limited thereto.

For example, the tablet terminal 10 is arranged in the work area W, and the worker H1 can perform work such as checking information of the order reception slip R displayed on the tablet terminal 10 in the work area W.

The hydroponic cultivation device 20 includes a cultivation unit 22 for fresh produce cultivation and a rack 21 on which the cultivation unit 22 is installed.

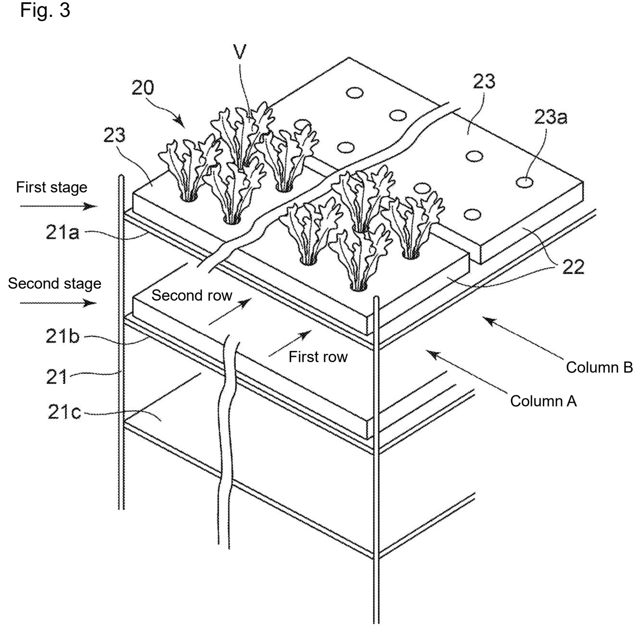

As illustrated in Fig. 3, each of the cultivation units 22 used in the present embodiment includes a nutrient solution tank that stores and circulates water containing a liquid fertilizer, and a planting panel 23 placed on the upper surface of the nutrient solution tank. In the planting panel 23, ten planting holes 23a for planting seedlings of the vegetables V are formed per panel.

The rack 21 includes a plurality of shelves 21a to 21c, and for example, ten cultivation units 22 can be arranged in parallel on each shelf.

The cultivation units 22 are arranged in parallel between a first position (frontmost row position) P1 on one end side adjacent to the work area W and a tenth position (rearmost row position) P10 on the other end side farthest from the work area W.

As a result, the worker H1 can also harvest the vegetables V growing in the cultivation unit 22 located at the frontmost row position P1 while staying in the work area W.

As described above, the system of the present invention according to the present embodiment can perform both the order receiving step and the harvesting step in the work area W. Therefore, the system of the present invention is convenient for associating the order information D with the vegetables V to be harvested.

Each of the cultivation units 22 is installed on the rack 21 in a movable state, and can replace or move the units as needed for the purpose of moving the cultivation unit 22 growing vegetables V suitable for harvesting to the frontmost row position P1 according to the growth state of the vegetables V, and making it available for viewing by the consumers through the display window.

The work table 30 is in the work area W, and the worker H1 can produce the fresh produce package B in the work area W even when the packaging work is performed.

In the packaging work, it is also optional to make the fresh produce package B by, for example, a packaging method using a vacuum pack having greater airtightness and protective capability in consideration of a delivery destination, a delivery method, and the like.

Part or all of the shipping work is performed on the work table 30.

The shipping port 40 is adjacent to the work area W, and the worker H1 performs shipping work of the fresh produce package B on the work table 30.

Examples of the shipping work include a work of displaying order information D associated with the vegetables V to be shipped, such as an orderer name and an orderer address, on the exterior of the fresh produce package B to be shipped, and a work of carrying the fresh produce package B on which the delivery destination is displayed from the work area W to the outside-facility area E.

Examples of the form of shipping and delivery include a method of delivering the fresh produce package B from the shipping port 40 to the delivery person H2 or the orderer H3 waiting in the outside-facility area E. In addition, it is also optional to deliver the fresh produce package B by so-called drone delivery, in which the fresh produce package B is accommodated in a small unmanned aerial vehicle into which the delivery destination information has been input and is directly transported from the shipping port 40 to the balcony of the consumer's home.

As described above, in the order delivery system of the present embodiment, all of the order reception work, the harvest work, the packaging work, and the shipping work can be performed in the same indoor space S. Therefore, it is possible to eliminate all complicated and time-consuming processes such as conventional cultivation in a field, harvest, packaging in a work place, delivery by a vehicle or the like, storage in a storage place, processing using sodium hypochlorite or the like, storage/display, and retail in a store.

Furthermore, along with this, not only does the margin of the intermediary organizations become unnecessary, but also all of the events such as impact occurring at the time of packaging, transportation, processing, display, and the like, contamination due to various bacteria, and the event of significant loss of freshness due to rapid temperature changes during refrigerated storage are eliminated.

Next, each process of the order delivery system according to the present embodiment will be described. In the present embodiment, a so-called online order performed via communication means such as the Internet will be described as an example.

In the present system, an orderer first makes a request to the server computer for order processing. Examples of the ordering means include not only online ordering but also means such as telephone, facsimile, and oral communication.

In the present embodiment, an order from a potential orderer is accepted in the order waiting state. The order waiting state is established on condition that mature vegetables V growing in the cultivation unit 22 are present.

In the order waiting state, when an order is received from a consumer, it is confirmed that the delivery destination is within a predetermined distance from the fresh produce cultivation facility with reference to the delivery destination information included in the order information D. As a result, an order is accepted only from an area where delivery can be made within a certain period of time.

As another exemplary embodiment, even in a case where there are no sufficiently mature vegetables V in the cultivation unit 22, it is also possible to adopt a configuration in which an imaging device (not illustrated) captures an image of the growth state of the vegetables, and an application for purchase reservation is received from a consumer who has browsed the image while the captured image is distributed via the Internet.

In this case, the purchase reservation holder can specify the harvest and the delivery at a desired timing, and the consumer can also reserve the purchase of the well-grown plant before maturation by focusing on the well-grown plant.

Here, as to whether or not mature vegetables V are present in the cultivation unit 22, for example, it is possible to determine whether or not the cultivation unit 22 is in the order waiting state by inputting information regarding the growth state in each cultivation unit 22 as needed, and it is also optional to install an imaging device capable of capturing the state of the cultivation unit 22 and to cause, for example, an image processing unit and a comparison calculation unit provided in a server computer to determine the growth state of plants from an image of each planting hole 23a.

Examples of the information on the growth state of the fresh produce include information on the presence or absence of the mature vegetables V and the number of plants. On the basis of whether or not the information on the number of plants of the mature vegetables V is a value greater than "0", it can be determined that it is in the order waiting state when the information is greater than "0".

In the present exemplary embodiment, when there are no mature vegetables V in the cultivation unit 22, an order waiting state is not established, and an order is not accepted. When the order quantity is greater than the number of plants of the mature vegetables V, the potential orderer is notified of the fact, and the order is accepted only when the order quantity is corrected to the number of plants or less.

In the present invention, when the system is configured to receive orders in the order waiting state, it goes without saying that harvesting, packaging, and shipping are performed after the order is received.

In addition, since the harvest immediately after the order is guaranteed, it is also possible to provide the orderer with a history of the ordered vegetables V from the growing state before the harvest to the delivery, which is excellent from the viewpoint of traceability.

When an order is received from a potential orderer while the cultivation unit 22 is in the order waiting state, order processing is started.

Upon receiving an order, the order reception slip R including the order information D may be displayed on the display of the tablet terminal 10, and the order reception slip R may be output in paper as necessary.

Examples of the order information D displayed on the order reception slip R include information on the type of vegetables V to be ordered, information on the order quantity, the name of the orderer, the address of the orderer, the delivery address, the worker's name, and the like.

When the worker H1 in charge of the harvest work, the packaging work, and the shipping work is determined at the time of receiving the order, the worker's information of each work may be included in the order information D.

When the order reception slip R is output, the order information D is associated with the mature vegetables V to be harvested, and the vegetables V will be harvested.

In the present embodiment, in terms of accepting an order only when mature vegetables V are present, it can be said that the present embodiment has a completely new configuration that is incompatible with a business model of a conventional contract farmer who wants to accept an order early.

The order information D associated with the mature vegetables V to be harvested is at least a part or all of the above order information.

For example, the vegetables V associated with the order information D are specified based on the information in a state where the order reception slip R is displayed.

As a situation in which the vegetables V are specified, for example, it is conceivable to associate the order information D with the mature vegetables V growing in the specific planting hole 23a of the specific cultivation unit 22.

Specifically, mature vegetables V that are being cultivated at the cultivation spot in the first row of column A of the cultivation units 22 in the frontmost row position P1 in the first stage of the rack 21 are specified.

In addition, in the order delivery system of the present embodiment, the worker H1 immediately before harvesting and/or during the harvesting work in a state of gripping the vegetables V can visually recognize the work area W (particularly, the work table 30 and the packaging material on the work table).

As a result, it is possible to confirm immediately before harvest whether or not there are mature vegetables V that have been previously harvested but are not yet packaged in the work area W, or whether or not there is a fresh produce package B that has been previously harvested and packaged but is not yet carried out, and it is possible to execute the harvest operation after confirming a state where there is no such vegetables V or fresh produce package B, and it is possible to prevent the loss of traceability due to a mixture of mature vegetables V associated with different order information D.

Therefore, as in the present embodiment, it can be said that it is preferable to configure the indoor space S (work area W) in which all of the order information D, the work table 30, and the shipping port 40 can be visually recognized from the harvest position.

Note that the information can be associated not only immediately after the order reception stage, immediately before the harvest operation, or at the time of harvest, but also at any time, and harvest date and time information and harvester information occurring at the time of harvest may be associated.

Similarly, the packaging date and time information and the packer's information generated at the packaging stage may be associated immediately after the packaging, or the shipping date and time information and the shipper information generated in the shipping work may be associated with the fresh produce package B to be shipped.

The association relationship between the order information D and the vegetables V is maintained not only at the time of harvest but also until the vegetables V are delivered to the orderer, and the orderer can acquire association information such as a harvest date and time and an estimated arrival date and time in a period from harvest to delivery to the orderer at any time.

It goes without saying that a system capable of disclosing such order information D in response to a request of an orderer is excellent in traceability and contributes to safety and security of food.

In the harvest stage, since the vegetables V growing in the hydroponic cultivation device 20 and associated with the order information D are harvested, the harvest is performed after the order.

Further, in the present system, the cultivation unit 22 can be moved as necessary such that the cultivation unit 22 in which the mature vegetables V suitable for harvesting are growing is arranged at the frontmost row position P1 of the hydroponic cultivation device 20.

Harvesting of the vegetables V growing in the cultivation unit 22 located at the frontmost row position P1 can be performed while the worker H1 is in the work area W.

In the packaging operation, the associated vegetables V are packaged to produce the fresh produce package B.

In the system of the present invention, similarly to the harvest work, the packaging work can be executed while visually recognizing the order information D output to the tablet terminal 10, and the packaging work can be executed while the order information D and the packaging material are recognized within the same field of view. Thus, the packaging work can be executed while maintaining the state in which the order information D is output, and the system is excellent in information association.

At the shipment stage, the fresh produce package B is carried out to the outside-facility area E.

In the system of the present invention, the shipping port 40 is disposed adjacent to the work area W (work table 30), and the fresh produce package B can be shipped immediately after being created.

In addition, in the present system, similarly to the harvest work, the fresh produce package B can be carried out while the order information D output to the tablet terminal 10 is visually recognized, and the shipment operation can be executed while the order information D and the fresh produce package B to be shipped are simultaneously visually recognized in the same field of view, and thus, it is the same as described above that the present system is excellent from the viewpoint of traceability.

Next, an operation flow of the order delivery system of the present invention will be described.

In the present embodiment, the order is received and processed on condition that the mature vegetables V suitable for harvesting are cultivated by the hydroponic cultivation device 20. Therefore, when it is determined that the mature vegetables V are not present in the cultivation facility, the order is not accepted.

Whether or not there are mature vegetables V under cultivation in the hydroponic cultivation device 20 can be determined by an arbitrary method such as determination based on an image obtained from an imaging device provided in the hydroponic cultivation device 20, or input of information by checking by the worker H1 as needed.

Next, it is determined whether there are mature vegetables V under cultivation in the cultivation unit 22 at the frontmost row position P1.

When the mature vegetables V are not present at the frontmost row position P1, the cultivation unit 22 in which the mature vegetables V are growing is moved from other rows to the frontmost row position P1.

Naturally, the mature vegetables V of the cultivation unit 22 can be harvested at positions other than the frontmost row position P1. However, as described above, the mature vegetables V of the cultivation unit at the frontmost row position P1 are excellent in that the mature vegetables V can be harvested while staying in the work area W.

As described above, the system according to the present exemplary embodiment stands by for an order in a state where mature vegetables V growing in the cultivation unit 22 at the frontmost row position P1 are present, and accepts the order when the order is received from a potential orderer.

Next, the system of the present invention checks the number of unprocessed received order cases. Here, if the number of unprocessed cases is one, the received order case is determined as a case to be processed subsequently.

When there are two or more unprocessed cases, one of them is determined as a case to be processed subsequently. For example, an order with the earliest order date and time is determined as a processing case.

The confirmation stage of the number of unprocessed received order cases and the determination stage of cases to be processed may be grasped as belonging to the same process.

When the system is configured such that the steps from the harvest to the shipment are not executed simultaneously in parallel in the plurality of received order cases, the multiple pieces of order information D do not coexist in the work area W, and a plurality of mature vegetables V harvested in response to the order do not exist. Therefore, it goes without saying that it is possible to prevent the occurrence of the mix-up of the vegetables V corresponding to the order information D.

When a received order case to be processed is determined, order information D of the received order case is output and displayed on the tablet terminal 10.

Thereafter, harvest work, packaging work, and shipping work are executed based on the order information D, and the fresh produce package B is delivered from the shipping port 40 to the orderer by appropriate delivery means.

By the way, in the present embodiment, the tablet terminal 10, the hydroponic cultivation device 20, the work table 30, and the shipping port 40 are disposed in the work area W or adjacent to the work area W. The system is configured such that the order information D and the vegetables V are reliably associated with each other by independently executing the processes from the harvest to the shipment of each received order case. In a case where each process such as the harvest, the packaging, and the shipment is executed by the worker H1, the work performance is excellent in a small number of workers (particularly, a single worker).

Furthermore, focusing on the movement of the worker H1 in a case where the worker H1 independently executes from the order reception to the shipment, the movement will be described with the time point when the worker H1 confirms the order reception as a starting point. In the system of the present embodiment using the movable tablet terminal 10, the order reception can be confirmed at any position in the work area W. However, here, for convenience, the order reception is confirmed at the position of the tablet terminal 10 illustrated in Fig. 1 (order reception confirmation position m1).

In the present system, the worker H1 who has confirmed the order reception at the order reception confirmation position m1 in Fig. 1 moves along the first movement path (first movement path distance) M1 from the order reception confirmation position m1 to the harvest position m2 to harvest the associated mature vegetables V.

Next, the worker H1 moves along the second movement path (second movement path distance) M2 from the harvest position m2 to the packaging position m3, and packages the harvested associated mature vegetables V.

Next, the worker H1 moves along the third movement path (third movement path distance) M3 from the packaging position m3 to the shipping position m4 together with the fresh produce package B formed by packaging to perform shipping, thereby completing a series of operations.

Thereafter, for example, the worker H1 moves from the shipping position m4 to the order reception position m1 along the fourth movement path (fourth movement path distance) M4.

In addition, when there is an unprocessed received order case at the time when the series of work is completed and the order reception is confirmed at the shipping position m4, the worker H1 moves from the order reception position (m4) where the order is confirmed to the harvest position m2, and then executes from the harvest to the shipment.

Each of the movement paths M1 to M4 is a straight line, is a movement path accommodated in the work area W, and is very short.

In the system of the present embodiment, a total movement path distance (first total movement path distance) Ma (M1+M2+M3+M4) from order reception to next order reception, a total movement path distance (second total movement path distance) Mb (M2+M3+M4) from harvest to next order reception, and a total movement path distance (third total movement path distance) Mc (M2+M3) from harvest to shipment are shorter than a unit movement path distance M9.

The unit movement path distance M9 is the longest movement path for movement or replacement of the cultivation units 22 in the hydroponic cultivation device 20, and is a distance corresponding to the distance 20Y in the longitudinal direction of the hydroponic cultivation device 20.

That is, in the system of the present embodiment, the movements M1 to M4 from the order reception to the next order reception are shorter than the longest movement path among the movement paths that occur during the system operation such as the unit movement path distance M9.

In the present embodiment, the movement of the cultivation unit 22 is not performed in the middle of order reception and shipping, and all operations from harvesting to shipping are completed in the work area W.

It should be noted that the unit movement path distance M9 is illustrated to be relatively short, and each of the movement paths M1 to M4 in the work area W is illustrated to be relatively long, so that the relative lengths cannot be determined by simple comparison in Fig. 1.

Further, in actual system operation, various movements such as a movement of a movement path for a longer distance occur. The above-described movement path distances Ma, Mb, and Mc are shorter than not only the unit movement path distance M9 but also the total length 20Y of the hydroponic cultivation device 20 and the longest distance of the hydroponic cultivation device 20. The maximum distance of the hydroponic cultivation device 20 in the present embodiment is a diagonal line distance connecting an upper right corner position 20a and a lower left corner position 20b of the hydroponic cultivation device 20 illustrated in Fig. 1.

Further, as the longest distance of the hydroponic cultivation device 20, the longest cultivation separation distance which is the longest among the separation distances between vegetables cultivated by the hydroponic cultivation device 20 can be exemplified.

The longest cultivation separation distance is a linear distance corresponding to a diagonal line connecting the position of the planting hole 23a at the lower right of the cultivation unit 22 at the frontmost row position P1 and the position of the spot 23a at the upper left of the cultivation unit 22 at the rearmost row position P10 illustrated in Fig. 1.

In a case where the cultivation unit 22 is not moved, considering that the vegetables under cultivation are harvested at the position farthest from the work area W and shipped, the movement path M2a from the harvest position m2a (according to the present embodiment, the harvest position m2a of the vegetables being cultivated at the upper left spot 23a of the cultivation unit at the rearmost row position P10 in Fig. 1) to the packaging position m3 becomes long.

In a case where the cultivation unit 22 is not moved, if a series of processes from receiving an order to shipping is repeatedly performed, even if the first order of the next series of steps is received at the shipping position m4, which is the end of the series of steps previously performed, if vegetables at the position farthest from the work area W are harvested and shipped, the movement path distance from the order reception position to the harvest position also becomes long, and these movement paths do not normally become straight lines.

The work area W in which the movement paths M1 to M4 fall within the range is an area surrounded by an adjacent edge (boundary edge) 20f of the hydroponic cultivation device 20 adjacent to the work area W, an adjacent edge (boundary edge) 30f of the work table 30 adjacent to the work area W, and the shipping port 40 (an adjacent edge (boundary edge) 40f of the shipping port 40) adjacent to the work area W.

That is, it can be said that the work area W is an area formed in a region surrounded by the hydroponic cultivation device 20, the work table 30, and the shipping port 40.

The work area W is an area in which each of the movement paths M1 to M4 can be realized as a linear movement path, and is in a state in which a configuration that obstructs the movement paths M1 to M4 is not included in the work area W.

Furthermore, assuming that connection lines other than the movement paths M1 to M4 among the straight connection lines obtained by connecting the respective positions of the order reception position m1, the harvest position m2, the packaging position m3, and the shipping position m4 in the work area W are referred to as lines of sight N1 and N2, the work area W has no configuration that obstructs visual recognition from one end side positions to the other end side positions of these lines of sight N1 and N2.

Examples of the line of sight include a connection line N1 connecting the order reception position m1 and the packaging position m3, and a connection line N2 connecting the harvest position m2 and the shipping position m4.

If there is no configuration that obstructs visual recognition on the lines of sight N1 and N2, the packaging position m3 can be visually recognized from the order reception position m1, and the shipping position m4 can be visually recognized from the harvest position m2.

If such visual recognition is possible, not only the next packaging work but also the next shipping work can be assumed at the time of the harvest work, and it is easy to realize harvest and shipment of fresh and delicious vegetables.

In the present embodiment, since there is no configuration that obstructs the linear movement on the movement paths M1 to M4 on which the linear movement is realized, for example, the packaging position m3 can be visually recognized from the harvest position m2, and the configuration is similarly excellent in terms of ease of work based on visibility.

The connection lines (lines of sight) N1 and N2 are straight lines in the work area W.

The order delivery system according to the present invention is not limited to the form described in the above embodiment, and is included in the technical scope of the present invention without departing from the spirit of the invention.

In the above-described embodiment, the cultivation target is leaf vegetables, but the target is not limited to leaf vegetables. It goes without saying that the cultivation target includes all fresh produce, including vegetables.
(1) For example, from the viewpoint of minimizing discarded vegetables and securing profits, it is preferable for contract farmers to receive orders as early as possible. At the stage of vegetable growth, the order frames may be filled and sold out (order acceptance stopped). It can be said that early sellout is favorable for contract farmers, including for the reasons described above.
(2) In addition, in order to deliver fresh produce such as delicious vegetables as much as possible, a contract farmer usually considers the growth state of vegetables, and attempts to harvest and ship vegetables in the best state at the state of shipment. However, in open-field cultivation and greenhouse cultivation, although the degree of influence varies, the growth state, the weather, and the like are inseparably related. However, when the shipment time is determined with a priority on flavor (that is, a priority on the growth state), the shipment time (or the arrival time) may not necessarily coincide with the desired time of the orderer. In this case, the orderer is urged to pay attention to the arrival time (shipping time) of the ordered vegetables and decide the cooking menu, but if the menu using the vegetables cannot be set as the cooking menu immediately after the arrival of the vegetables, the arriving vegetables are eventually eaten after a number of days have elapsed from the harvest. That is, although the contract farmer shipped vegetables in the optimum season directly, the vegetables are actually eaten in the period in which the quality deteriorates after the elapse of a number of days from harvest, and the so-called delicious period is missed.
(3) As such specific problems have been further identified, as a result of intensive studies on a more excellent vegetable shipping method including the relationship between the cultivation period (or growth state) of the vegetables and the order timing, it has been found that the timing at which the orderer places an order (order reception timing) is important, and that if a harvesting and shipping system focusing on the order timing can be constructed, it leads to solving the above-described problems.
(4) A method for shipping fresh produce cultivated in a cultivation facility according to an order, the method including: an order receiving step of receiving an order; a harvesting step of harvesting the fresh produce ordered in the order receiving step; a packaging step of packaging the fresh produce harvested in the harvesting step; and a step of shipping a package packaging the fresh produce harvested in the packaging step, wherein the order receiving step is a step of receiving an order related to the fresh produce being cultivated in the cultivation facility; and the order receiving step is a step of receiving the order when at least a part of the fresh produce being cultivated in the cultivation facility is mature fresh produce in a growing state suitable for consumption, the harvesting step is performed after receiving the order in the order receiving step, the packaging step is a step of packaging the mature fresh produce harvested in the harvesting step after the order receiving step, and the shipping step is a step of shipping a package of the mature fresh produce harvested and packaged in the harvesting step after the order receiving step.
(5) In the present invention, when an order for mature fresh produce (including mature vegetables) is received in the order receiving step, harvesting is performed immediately thereafter, and the fresh produce is packaged and shipped. That is, according to the present invention, it is possible not only to expedite the shipment from the harvest but also to promptly perform the shipment from the order reception.
(6) If shipment can be promptly performed after receipt of an order, mature vegetables under cultivation can be harvested and shipped in a state suitable for consumption (suitable for eating) rather than vegetables suitable for shipment, and it is excellent to provide fresh and delicious produce (including vegetables). This is a shipping system that is inconceivable for contract farmers who want to complete sales by receiving orders as soon as possible.
(7) By the way, the reason why speedy shipment from order reception can be achieved is that, first, the order receiving step according to the present invention receives an order for mature vegetables under cultivation in a cultivation facility. In other words, in a case where there is no mature fresh produce under cultivation in the cultivation facility, an order is not received (an order is not accepted).
(8) As described above, in the present invention, since the order is received only when there are mature fresh produce that can be shipped, it is possible to harvest immediately after receiving the order, and it is possible to realize quick shipment thereafter.
(9) Further, from another point of view, in the present invention, when receiving an order from a consumer and shipping mature fresh produce, the mature fresh produce to be shipped to the orderer is always harvested after the order from the orderer, and is not harvested before the order. That is, it can be said that the mature fresh produce harvested in the harvesting step is necessarily harvested in a state in which order information having an association relationship exists, more specifically, in a state in which an association relationship exists between the mature fresh produce and the order information obtained in the order receiving step.
(10) In addition, it can be said that the orderer at the time of ordering is in a state in which the desire for obtaining fresh produce (including vegetables) to be ordered is maximized. That is, according to the present invention, when the desire of the orderer to "want the fresh produce" is maximized (immediately after the desire is maximized), the fresh produce can be harvested, packaged, and shipped.
(11) Examples of the state in which the desire for fresh produce is maximized include a state in which a cooking menu for dinner on the day (or the next day's meal) using the ordered mature vegetables is determined (a state clearly visualized in mind).
(12) For the cooking menu on the day or the next day, for example, as compared with the cooking menu after two or three months (for example, the estimated delivery timing of vegetables ordered early to a contract farmer), it is easy to visualize the desire to eat the dish, and it is easy to maintain motivation for realization. Then, with the development of distribution in recent years, it is possible to notify the estimated arrival date and time at the time of shipment, and moreover, the required time from shipment to arrival can be as short as several hours (at least within 24 hours).
(13) That is, according to the present invention, it is possible to realize that the vegetables are harvested after ordering (receiving an order) in a state where a desire for the vegetables increases, and the vegetables arrive before starting cooking of a cooking menu of the day or the next day determined at the time of ordering, the vegetables are used for cooking, and then the dish is eaten.
(14) As described above, according to the present invention, it is possible to realize a harvest/shipment cycle of foods in an unprecedented order (an unprecedented idea) in which vegetables harvested after determining a cooking menu are used to cook and eat the cooking menu.
(15) By the way, when analyzing, from the viewpoint of the passage of time, the situation in which the orderer imagines a cooking menu that the orderer desires to eat on the same day or the next day, it means that, at the time of imaging (the starting point or beginning), the cooking start date and time (the due date or end point) of the imagined dish for that day or the next day is determined.
(16) According to the present invention, a series of steps of harvesting, packaging, and shipping of the ordered vegetables are all performed within a time elapsed period from the image date and time to the cooking start date and time (within a period from the start point to the end of the period).
(17) That is, according to the present invention, the ordered vegetables arrive at the orderer without interfering with the schedule (assumed schedule) imaged by the orderer at the time of ordering (at the time of receiving the order), so that the orderer can easily realize the cooking schedule as imaged in advance at the time of ordering, and in this respect, the present invention can be said to be an extremely excellent shipping method. This is because if the cooking schedule can be executed according to the original image, the arriving vegetables will be immediately used for cooking, and then the provision of fresh vegetables will be achieved in reality.
(18) No matter how much the period from harvest to arrival can be shortened, if the vegetables arrival time and the schedule of the orderer do not mesh with each other, there is a risk that the arriving vegetables will not be eaten immediately (used for cooking), the period from harvest to eating will be long, thus failing to ensure the supply of fresh vegetables (fresh vegetables could not be consumed).
(19) In this regard, according to the present invention that focuses on the order timing, the orderer can easily execute the cooking schedule according to the image (assumed schedule), and it is a highly effective shipping method for improving the practicality of immediate consumption of the arrived vegetables.
(20) Focusing on not disturbing the image of the orderer, the present invention can be said to be a harvest shipment system in which the consumer (orderer) takes the initiative (or in which the initiative is realized to be handed over to the consumer).
(21) As described above, in the present invention, the harvest timing is always later than the time point of the order (order reception), that is, the time point when the cooking menu is imaged, but this can also be said to be because it is premised on the presence of the association information, which means that the vegetables associated with the order information are harvested.
(22) Note that the term 'order' mentioned here is based on a desire such as "wanting the particular vegetables", for example. In other words, the order information corresponds to desire information. In this case, the present invention is a method of harvesting and shipping vegetables associated with the desire information (order information) such as "wanting the particular vegetables".
(23) Conventionally, it may be considered that fresh vegetables can be provided by shortening the period from harvest to arrival. However, in the present invention, attention is paid to the importance of the order timing, and it is considered that shortening the period from order to consumption (actually eating) rather than from harvest to arrival leads to the provision of fresh vegetables. Therefore, the association between order and harvest, and thus order and consumption is realized, so that the period from order to consumption is shortened, and the provision of true fresh vegetables is realized.
(24) Further, in the present invention, the orderable period is limited to a period during which mature vegetables are under cultivation, and the present invention is excellent from the viewpoint of providing delicious vegetables. Furthermore, the present invention in which harvesting is performed after ordering (order reception) is excellent not only in terms of deliciousness but also in terms of freshness.
(25) According to the present invention, as is apparent from the above description, vegetables suitable for consumption can be harvested and shipped instead of harvesting and shipping vegetables suitable for shipment.
(26) According to the present invention, vegetables associated with order information are harvested after receipt of an order, and according to the present invention, association of order information with vegetables is performed when the vegetables are under cultivation.
(27) Therefore, according to the present invention, for example, the provider of the system according to the present invention can provide the orderer with information in real time regarding the growing state before harvest of the vegetables that the orderer himself/herself will eat soon, can provide a video of the harvest work itself in real time if the image data communication is possible, thereby indicating that the vegetables are harvested after the order by providing the order date and time and the harvest date and time. As described above, according to the present invention, it is possible to provide all the information after the harvest time point for the vegetables associated with the order information.
(28) That is, the present invention is extremely excellent from the viewpoint of traceability, and is extremely excellent not only from the viewpoint of freshness and flavor of vegetables but also from the viewpoint of ensuring and providing the safety and security of food.
(29) The harvesting step includes a step of associating at least one piece of information of harvester information and harvest date and time information of the mature harvested fresh produce with the mature harvested fresh produce.
(30) In addition, the packaging step includes a step of associating at least one of packer's information and packaging date and time information of the mature harvested fresh produce with the mature harvested fresh produce, and the shipping step includes a step of associating at least one of shipper information and shipping date and time information of the package with the mature harvested fresh produce.
(31) The present invention is a system having excellent information associating properties, and is capable of easily, quickly, and accurately associating information generated after receiving an order, such as information regarding a harvest step, and is excellent from the viewpoint of providing information to an orderer, and is excellent from the viewpoint of traceability.

## Claims

1. An order delivery method for fresh produce for directly delivering fresh produce grown in a fresh produce cultivation facility without passing through intermediary organizations or the like after harvesting the fresh produce in response to an order from a consumer, the method comprising:
an order waiting step of being in a waiting state for an order from a consumer for the fresh produce when the fresh produce reaches a mature state suitable for harvest;
a delivery destination confirmation step of referring to delivery destination information included in an order when the order is received from a consumer in the waiting state to confirm that the delivery destination is within a predetermined distance from the fresh produce cultivation facility;
a plant number confirmation step of confirming that a number of plants of mature fresh produce necessary for accommodating the order exists;
a harvesting step of harvesting fresh produce corresponding to the order on condition that it is confirmed in the delivery destination confirming step that the delivery destination is within a predetermined distance and that a number of plants of mature fresh produce required in the plant number confirmation step exists;
a packaging step of packaging the fresh produce harvested in the harvesting step; and
a delivery step of directly delivering the fresh produce package created in the packaging step to the consumer.

2. The order delivery method for fresh produce according to claim 1, wherein the fresh produce cultivation facility includes a hydroponic cultivation device.

3. The order delivery method for fresh produce according to claim 1 or 2, wherein the fresh produce cultivation facility is managed in a substantially sterile state by a structure having high airtightness and/or installation of a ventilation system.

4. The order delivery method for fresh produce according to claim 1 or 2, wherein in the fresh produce cultivation facility, the number of people who can enter the facility at the same time is managed to a maximum of one person.

5. An order delivery method for fresh produce for directly delivering fresh produce grown in a fresh produce cultivation facility without passing through intermediary organizations or the like after harvesting the fresh produce in response to an order from a consumer, the method comprising:
a distribution step of distributing, via the Internet, an image of fresh produce in a growth process captured by an imaging device provided in the fresh produce cultivation facility;
a delivery destination confirmation step of referring to the delivery destination information included in the purchase reservation and confirming that the delivery destination is within a predetermined distance from the fresh produce cultivation facility when a purchase reservation for the fresh produce is requested by a consumer who has browsed the image;
a reservation acceptance step of accepting the reservation on condition that it is confirmed in the delivery destination confirmation step that the delivery destination is within a predetermined distance;
a harvest and delivery timing designation step of designating a harvest and delivery timing at a desired timing for fresh produce for which purchase is reserved by the consumer;
a harvesting step of harvesting fresh produce according to the designation of the harvest timing;
a packaging step of packaging the fresh produce harvested in the harvesting step; and
a delivery step of directly delivering the fresh produce package created in the packaging step to the consumer according to the designation of the delivery timing.

6. An order delivery system for fresh produce for directly delivering fresh produce grown in a fresh produce cultivation facility without passing through intermediary organizations or the like after harvesting the fresh produce in response to an order from a consumer, the system comprising:
order waiting means for starting a waiting state for an order from a consumer for the fresh produce when the fresh produce reaches a mature state suitable for harvest;
delivery destination confirmation means for referring to delivery destination information included in an order when the order is placed from a consumer in the waiting state to confirm that the delivery destination is within a predetermined distance from the fresh produce cultivation facility;
plant number confirmation means for confirming that the number of plants of mature fresh produce necessary for responding to the order exists;
harvesting means for harvesting fresh produce corresponding to the order on condition that it has been confirmed in the delivery destination confirmation means that the delivery destination is within a predetermined distance and that a number of plants of mature fresh produce required in the plant number confirmation means exists;
packaging means for packaging the fresh produce harvested by the harvesting means; and
delivery means for directly delivering the fresh produce package created by the packaging means to the consumer.

7. A fresh produce cultivation facility having at least a hydroponic cultivation device, a ventilation system, a harvest area, a packaging area, and a carrying-out area of fresh produce packages, and having a structure having high airtightness, wherein the number of people who enter the facility at the same time is managed by appropriate means to a maximum of one person.

8. The fresh produce cultivation facility according to claim 7, further comprising a display window through which the inside of the facility can be viewed from the outside, wherein the hydroponic cultivation device includes a unit installation portion in which a plurality of cultivation units are detachably installed.

9. The fresh produce cultivation facility according to claim 8, wherein the cultivation unit includes a nutrient solution tank and a planting panel placed on the nutrient solution tank, the planting panel includes a predetermined number of planting holes, and an upper end portion of the planting hole is formed in an R-shape.
